# EUROPEAN PATENT APPLICATION

(11) **EP 0 653 894 A2**
(43) Date of publication of application: **17.05.1995**
(21) Application number: 94308227.1
(22) Date of filing: 09.11.1994
(51) Int. Cl.: H04Q 7/20, H04Q 7/32

(54) **A public multiplexed mobile telephone system for masstransit applications**

(30) Priority: 16.11.1993 US 152556
(71) Applicant: AT&T Corp., New York, NY 10013-2412 (US)
(72) Inventor: Kartalopoulos, Stamatios V., Annandale, New Jersey 08801 (US)
(74) Representative: Buckley, Christopher Simon Thirsk

(57) **Abstract**

The present invention relates to public mobile phone systems for mass-transit application which utilize time division multiplexing and time slot interchanging techniques useful for allowing individual passengers to make calls during commuting, and charging the individual for their telephone call(s) made, only. Such mass-transit applications include, but are not limited to buses, trains, metrorails, sea coastal vessels and streetcars.

## Description

### Field of the Invention

The present invention is directed to a public mobile phone system and more particularly to a public mobile phone system for mass transit applications, including, but not limited to buses, trains, metrorails, streetcars and sea coastal vessels, for allowing individual passengers to make calls while commuting.

### Information Disclosure Statement

Cellular telephony, to date, has addressed the need of communicating with the rest of the world when the subscriber is in a vehicle and in traffic or when in an area where stationary telephones are not easily accessible and the area is serviced by cellular telephony. The mobile telephone, however, is a "personal" phone; i.e. the subscriber "owns" it, must carry it with him/her, and must pay subscription on a monthly basis, in addition to all telephone charges for calls made with his/hers mobile telephone. However, for a variety of reasons, not everyone can have a mobile telephone. Herein, the terms cellular telephone or mobile telephone refer to the same apparatus.

Consequently, to date, cellular telephony has not addressed another need: communication from a public transportation vehicle whereby a passenger can call during commuting, without "owing" the cellular phone and be charged for the telephone call made, only.

United States Patent no. 5,134,651 issued to Ortiz et al is directed to an autonomous pay telephone which allows a user to access information regarding the amount owed for individual calls such that an owner of such telephone can charge the user an appropriate fee. Such system, however, does not pertain to mass-transit vehicles where the telephone is not owned and the user is allowed to pay for such call using a personal credit card or calling card as in the present invention.

United States Patent No. 5,109,401 issued to Hattori et al is directed to a radio telecommunication apparatus which calculates and stores a charge rate, however, does not pertain to a system whereby the apparatus is to be used by a plurality of user's who will be charged separate fees as in the present invention.

Therefore, none of the prior art teaches a pay-by-call mobile telephone system for mass-transit vehicles whereby the cellular telephone is not owned.

### SUMMARY OF THE INVENTION

The present invention pertains to a public mobile telephone system whereby a multiplicity of telephones is multiplexed and placed in a public transportation vehicle. This system is connected with a stationary cellular telephone system over a wireless link, and provides a pay-by-call service to passengers without them having to move about the vehicle in order to access the mobile pay-phone. The system includes means for data transmission, e.g. personal computer hook-up ports/jacks, as well as the above stated means for voice transmission- telephones, means for detecting "On-Hook/Off-Hook" signals and means for processing the signals to allow a user to make a call. The user's charge is based on predetermined parameters.

### BRIEF DESCRIPTION OF THE DRAWINGS

The present invention will be more fully understood when the instant specification is taken in conjunction with the drawings which are appended hereto, wherein:

Figure 1 illustrates a schematic diagram of the present invention showing the inter-relationship between the various components; and

Figure 2 illustrates a schematic diagram of the present invention showing the inter-relationship between the various components and the circuitry.

### DETAILED DESCRIPTION OF THE INVENTION

A public mobile telephone apparatus is proposed whereby a large number of telephones having handsets and respective cradles and, optionally, ports, for personal computer hook-up using a modem, are installed at convenient and easily accessible locations within a public transportation vehicle, e.g. at the back of a chair, in the armrest, and multiplexed, with only a few, as many as the radios in the system, being activated at a given time.

The handsets in the system are connected with the radios on a "first come first serve" basis--as soon as they go "Off-Hook". For example, a system with 40 handsets and. four radios supports up to four simultaneous telephone calls; the remaining 36 handsets being "blocked". To originate a call, the user lifts the handset, enters his/her calling credit card number and the calling number.

Using a calling/credit card enables the user, without being a subscriber to cellular service, to take advantage of it on a pay-by-call basis; calls are charged to the calling card number and not the calling phone.

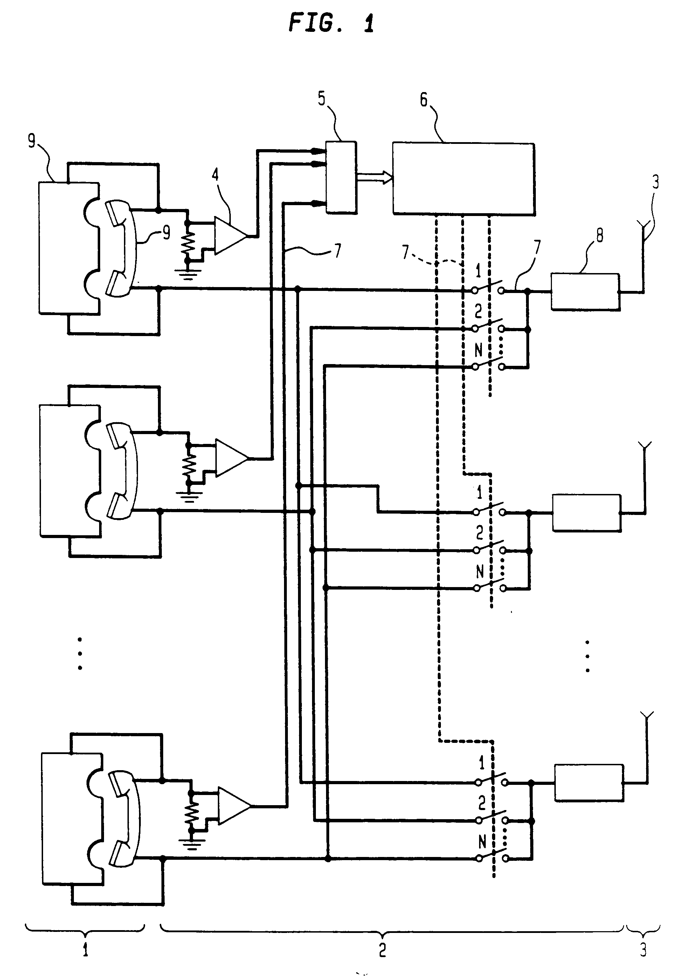

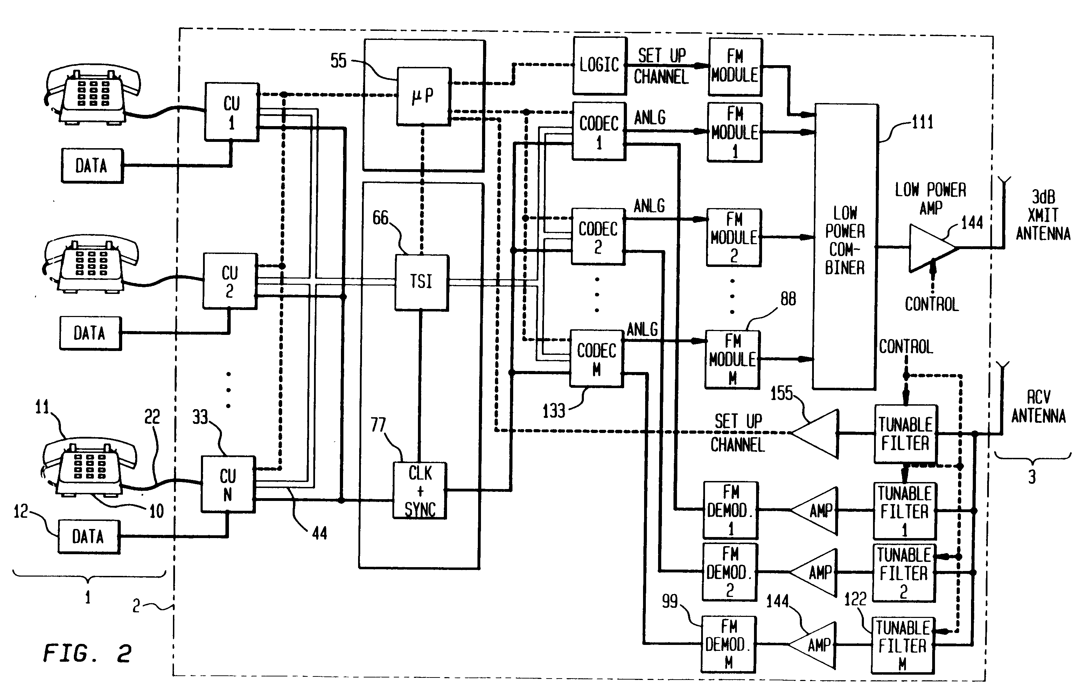

According to Figure 1, the telephones 1 and ports 12 (Figure 2) are connected with and terminate at the main body of the system 2 which is stored in a hard to access and secure place in the vehicle (not shown). The main body is accessible by authorized personnel only and it contains all necessary electronics, including detection devices, such as op-amps 4 for detecting "On-Hook" and "Off-Hook" modes, and a controller for receiving and responding to the On-Hook/Off-Hook signals 5 and for processing the signals 6 through circuitry channels 7 to radios 8 which communicate with the cellular earth station (not shown) via cellular radio telecommunication channels. The transceiving antenna 3 and the telephones 1 and ports 12 are the only visible parts.

A telephone 1 becomes active when the handset is lifted from the cradle or a modem from a user's personal computer is hooked-up to the port 12 ("Off-Hook"). Voice analog signals are then sent to the main body of the system 2. Electrical analog signals from a multiplicity of active phones are pulse code modulation (PCM) encoded and time division multiplexed (TDM). Additional signaling bits are added to PCM word for system operation.

Once a telephone or port is active, the mobile system detects it and automatically requests bandwidth from the cellular earth station. If bandwidth is allocated then it is assigned to the "Off-Hook" mode. Bandwidth is dynamically allocated by the cellular earth station, based on availability.

When another telephone or port of the mobile system goes "Off Hook", the mobile system again detects it and it requests more bandwidth from the earth station, and so on.

For a call to be connected, the calling or credit card number must be entered by the user and accepted by the cellular earth station or the local switch. After the calling card number has been accepted, the user is instructed to enter the destination number. When connectivity has been established (an answer on the other end of the phone) the user's calling card is charged with all calling charges based on predetermined parameters including, but not limited to: duration of call- the elapsed time period from the "Off-Hook" activation to the "On-Hook" activation, destination of call, carrier's charges and perhaps time of the day. A surcharge may also be incorporated in the charging scheme that may be given back to the system owner to defray equipment cost and maintenance. Phones are de-activated and bandwidth re-allocated upon the placement of the phone back on the cradle or a command from the computer to terminate the call ("On-Hook" mode). For simplicity of using the mobile system, the user is instructed by means of lighted or audio messages of the various actions he/she has to take to place a call.

In one embodiment of the invention, the handset or cradle has four lighted, tamper-proof areas 9. Each lighted area provides instructions for the next step. (In the case of a user with a personal computer, the instructions would appear on their screen.) For example, each area may.convey the following messages:
1. To place a call, remove handset from the cradle.
2. Enter your calling/credit card number, please.
3. Enter the calling party number, please.
4. To terminate your call, please place handset back in the cradle.

A fancier model may display these messages and the entered numbers on an alphanumeric light-emitting diode (LED) display or backlighted liquid crystal display (LCD) (not shown); the display must be readable in the dark. The display may also be voice activated, but such model should resolve a language problem.

Figure 2 illustrates a schematic of the circuitry/electronics of the present invention. When a handset 11 of the mobile system goes off the cradle 10, or a modem from a user's personal computer is activated through the port 12, current flows around a short loop 22 and in a channel unit 33 part of the mobile system. This flow is detected and translated into an "Off Hook" code or signal which is multiplexed in the pulse code modulation (PCM) bit stream 44 (=). This code is also monitored and when detected is reported to the controller 55(---) of the mobile system. The PCM and signaling bits may pass through a time slot interchange (TSI) circuit 66. The controller then, makes an association of the telephone or port and the time slot number and sends a message over the set up (signaling) radio channel 155 to the cellular earth station requesting bandwidth. This message includes the mobile system's I.D., which the earth station recognizes to grant bandwidth. The controller makes then another association of the time slot number with the frequency band granted, and it turns off the first message at the handset, cradle, or computer screen and lights the second message. The user then enters the calling card number which the mobile system transmits to the cellular earth station and local switch. The earth station confirms the validity of the card number and sends a message to the mobile station. The user then hears a dial tone and, the controller turns off the second message and lights on the third one asking the user to enter the destination number. When the destination number has been entered and the call has been answered by the other end, the controller turns the third message off and it turns the fourth message on. Thus, the controller keeps a record of the communication path between the "Off-Hook" mode and the cellular earth station: phone "Off-Hook" - time slot - frequency band.

When the user hangs up, then an "On-Hook" mode is recognized by the channel unit of the mobile system and the cdntroller turns off the fourth message, turns on the first message and sends a message to the cellular earth station to de-assign the allocated bandwidth, and the phone-to-frequency and association is erased. Communication between the phone/port and earth station is terminated. Such termination results in a charge to the user's card.

Much of the circuitry of the main body 2 of the mobile system encompasses components well known in the art, including a clock and synchronizer 77, CODEC's 133, FM modulators 88, FM demodulators 99, a low power combiner 111, tunable filters 122 and amplifiers 144. However, variations of the circuits could be designed to accomplish the functions of the present invention.

The handset of the present invention should be of a theft proof touch-tone® (key pad) type.

The main body of the mobile system can be stored in a portable enclosure (shoe-box size) and secured in a compartment. The system is easily expandable in number of phones or radios, or both, as needed.

The advantages of the present invention include the user, although not "owning" the phone, nor being a subscriber, having equal access to the benefits of cellular technology. In addition to the ease of accessibility, the user is not charged a fee to "own", but rather is charged per call.

Obviously, numerous modifications and variations of the present invention are possible in light of the above teachings. It is therefore understood that within the scope of the appended claims, the invention may be practiced otherwise than as specifically described herein.

## Claims

1. A mobile telephone system for mass-transit applications comprising:
(a) a plurality of mobile telephones having a plurality of handsets and a plurality of corresponding cradles, said plurality of mobile telephones having a plurality of respective ON/OFF switches therein, activation of said OFF switch producing a first signal indicating a handset is off a cradle and activation of said ON switch producing a second signal indicating said handset is on said cradle; and,
(b) controller means for receiving and responding to said first and second signals, said controller means including means for processing said signals via cellular radio telecommunication channels to allow a plurality of users to make calls, and including means for calculating said plurality of users' charges based on at least one predetermined parameter.

2. The system of claim 1, further comprising a plurality of ports which communicate with said controller means by producing ON/OFF signals for allowing said plurality of users to hook-up personal computers for data transmission.

3. The system of claim 1, wherein said controller means includes a micro-processor.

4. The system of claim 3, wherein said controller means further comprises circuitry channels and radios.

5. The system of claim 1, wherein said plurality of telephones comprises display means for displaying instructions to said users.

6. The system of claim 1, wherein said plurality of telephones further comprises audio means for instructing said users in operating said telephones.

7. A mobile telephone system for mass-transit applications comprising:
(a) a plurality of user telephones having respective ON/OFF switches;
(b) a plurality of radio channels;
(c) means for processing said switches of said plurality of telephones, said means for processing providing available radio channels to a respective number of user telephones;
(d) means for sequencing said switches of said plurality of telephones such that a first of said plurality of telephones is assigned a first available radio channel and an x number of said plurality of telephones is assigned a y number of said plurality of radio channels, where x is and integer of at least two and y is an integer less than or equal to x;
(e) means for displaying instructions to users for placing a call when said available radio channel is attained;
(f) means for calculating said users' charges based on at least one predetermined parameter.

8. The device of claim 7, wherein the means for processing said switches of said plurality of telephones is a micro-processor.

9. The device of claim 7, wherein the means for sequencing is a time slot interchange circuit.

10. The system of claim 5 or 7, wherein said display means is an alphanumeric light-emitting diode (LED) or a backlighted liquid crystal display (LCD).

11. The device of claim 1 or 7, wherein said respective ON/OFF switches are located within either respective handsets or respective cradles of said telephones.

12. A mobile telephone system for mass-transit application comprising:
(a) a plurality of transmission means having means for communicating a first message for directing a user in operating the telephone system and respective ON/OFF switches therein;
(b) means for detecting and translating information from said ON/OFF switches thereby producing a code for each of said plurality of transmission means;
(c) means for processing said code and producing a signal based on said code;
(d) means for communicating a second message for directing the user to enter a calling card or credit card number;
(e) means for terminating said second message;
(f) means for communicating a third message for instructing the user to enter a destination number;
(g) means for terminating said third message;
(h) means for communicating a fourth message for instructing the user in how to terminate a call when finished;
(i) means for detecting the "ON" switch; and,
(j) means for calculating users' charges based on at least one predetermined parameter.

13. The system of claim 12, wherein said plurality of transmission means comprises a plurality of telephones having handsets and cradles, and said display means is an alphanumeric light-emitting diode or a backlighted liquid crystal.

14. The system of claim 13, wherein said transmission means further comprises a plurality of ports for personal computer hook-up.

15. The system of claim 1, 3, 7 or 12, wherein said at least one predetermined parameter is from the group consisting of: a time of day, a length of time from an OFF switch activation to an ON switch activation, a carrier's fee, a call destination and a surcharge.
